# EUROPEAN PATENT APPLICATION

(11) **EP 1 586 974 A2**
(43) Date of publication of application: **19.10.2005**
(21) Application number: 05007872.4
(22) Date of filing: 11.04.2005
(51) Int. Cl.: G06F 1/00

(54) **Apparatus and software program for controlling a terminal**

(30) Priority: 14.04.2004 JP 2004119485
(71) Applicant: Olympus Corporation, Shibuya-ku, Tokyo (JP)
(72) Inventor: Miura, Hiroaki, Shibuya-ku, Tokyo (JP)
(74) Representative: von Hellfeld, Axel

(57) **Abstract**

A personal computer (PC) (30) as a terminal control apparatus customizes a function assignment for assigning a particular function to a particular switch in an integrated circuit (IC) recorder (20) as a terminal. Using only a particular IC recorder having a key ID, from among other IC recorders (20), a customization software program is installed in the computer and the installed software program is initiated. With the software program initiated, a function customization operation is performed on an IC recorder (20) having no key ID. Without using an electronic key by the PC (30), the function of the IC recorder is customized for dealers who own the particular IC recorder.

## Description

### BACKGROUND OF THE INVENTION

### 1. FIELD OF THE INVENTION

The present invention relates to a terminal control apparatus and a terminal control software program for performing a predetermined operation on a terminal.

### 2. RELATED ART STATEMENT

An electronic apparatus (mobile terminal), such as a cellular phone, allowing a user to customize a menu content or the like is disclosed in Japanese Unexamined Patent Application Publication No. 10-161832. The electronic apparatus includes a memory storing a menu composed of menu elements which the user adapts using an adjustable parameter, a display displaying the menu on the screen thereof, and a customizing unit for customizing a display status of the menu on the screen.

In the known electronic apparatus, memory capacity for customizing the menu is saved. With a simple operation, the user can customize the menu so that each function is performed with resources involved in the performing of the function saved. The customization function is thus not a particular one of which execution is enabled only when particular conditions are established.

### SUMMARY OF THE INVENTION

An object of the present invention is to provide a terminal control apparatus and a terminal control software program for performing a predetermined operation on a terminal when particular conditions are established.

A terminal control apparatus of one embodiment of the present invention performs a predetermined operation on a mobile information terminal connected thereto, and includes communication means connected to the mobile communication terminal for communication, terminal operating means for performing the predetermined operation to the mobile information terminal via the communication means, key information detecting means for detecting whether predetermined key information is present in the connected mobile information terminal, and control means for permitting the terminal operating means to perform the predetermined operation if the key information detecting means detects the predetermined key information or inhibiting the terminal operating means from performing the predetermined operation if the key information detecting means detects no predetermined key information.

A terminal control software program of another embodiment of the present invention causes a computer to perform a predetermined operation on a mobile terminal information connected to the computer and is stored in a recording medium, and includes steps of establishing a connection to the mobile information terminal for communication, detecting whether the mobile information terminal has predetermined key information, performing the predetermined operation to the mobile information terminal if the predetermined key information is detected, and inhibiting the computer from performing the predetermined operation on the mobile information terminal if the predetermined key information is undetected.

These and other features and advantages will become apparent from the following description.

### BRIEF DESCRIPTION OF THE DRAWINGS

Fig. 1 illustrates a personal computer (PC) as a terminal control apparatus and an integrated circuit (IC) recorder as a mobile recording terminal USB connected to the personal computer in accordance with one embodiment of the present invention;
Fig. 2 is a block diagram illustrating the IC recorder of Fig. 1;
Fig. 3 is a memory map of an internal memory of a system controller contained in the IC recorder of Fig. 1;
Fig. 4 is a flowchart of a control process main routine of the IC recorder of Fig. 1 during recording or the like;
Fig. 5 is a flowchart of a subroutine of a USB communication mode invoked in the main routine of Fig. 4;
Fig. 6 is a flowchart of an installation process of a customization software program to the PC of Fig. 1;
Fig. 7 shows a part of a flowchart of a customization process of the customization software program in the PC of Fig. 1; and
Fig. 8 shows another part of the customization process of the customization software program in the PC of Fig. 1.

### DESCRIPTION OF THE PREFERRED EMBODIMENTS

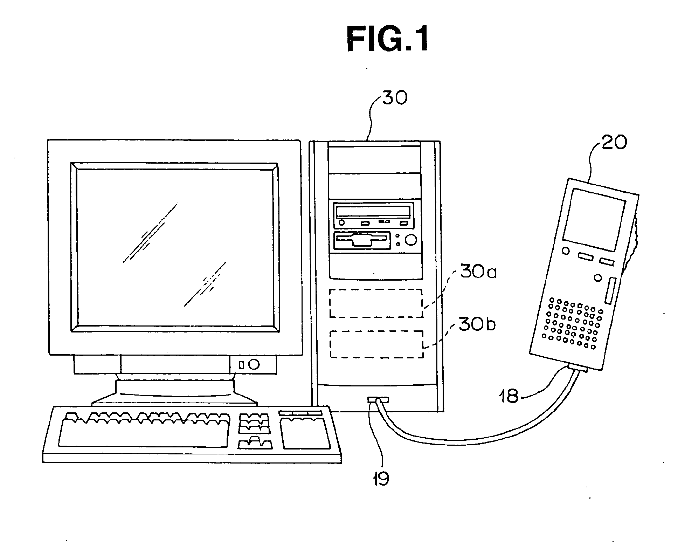

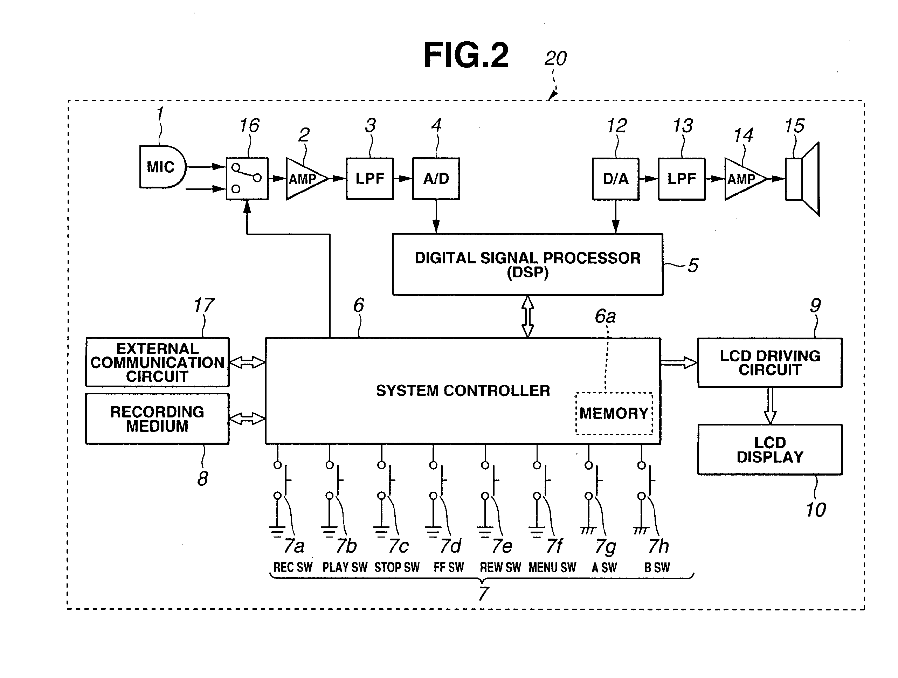

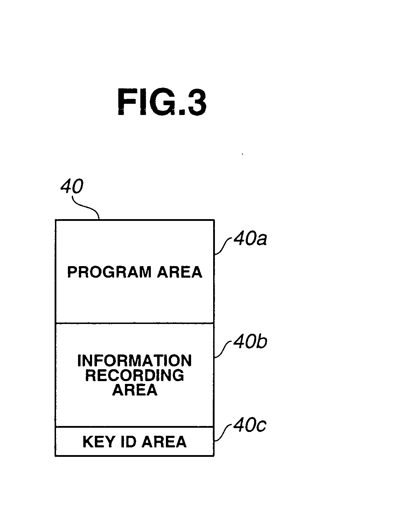

The embodiments of the present invention are described below with reference to the drawings. Fig. 1 illustrates a personal computer (PC) as a terminal control apparatus and an integrated circuit (IC) recorder as a mobile recording terminal universal-serial-bus (USB) connected to the personal computer in accordance with one embodiment of the present invention. Fig. 2 is a block diagram illustrating the IC recorder of Fig. 1. Fig. 3 is a memory map of an internal memory of a system controller contained in the IC recorder of Fig. 1.

As shown in Fig. 1, the PC 30 serving as the terminal control apparatus of the present embodiment is a personal computer communicatingly connected to the IC recorder 20. The PC 30 includes a controller 30a for controlling the entire computer and an external communication circuit 30b communicating with the IC recorder 20 via a USB connection.

The controller 30a includes communication control means for communicating with the IC recorder 20, terminal operating means for setting functions, namely, performing a customization operation, as one example of predetermined operations, to the terminal, key information detecting means for detecting whether a key identification (ID) as predetermined key information is present in a connected particular IC recorder 20, and control means for permitting the terminal operating means to perform the predetermined operation on another IC recorder 20 if the key information detecting means has detected the predetermined key ID, or inhibiting the terminal operating means from performing the predetermined operation on the other IC recorder 20 if the key information detecting means has not detected the predetermined key ID.

A customization software program is installed on the controller 30a of the PC 30. Under the control of that software program, control means in the controller 30a operate, performing a customization operation on the IC recorder 20. The PC 30 captures voice data from the customized IC recorder 20 via the communication control means, and transcribes the voice data using a transcription software program.

The IC recorder 20 is a voice data recorder that stores and plays voice data to and from a removable recording medium (flash memory card), and has a model name DS-4000, for example. The IC recorder 20 includes particular function switches customized and having particular functions in addition to a record (REC) switch to be discussed later.

Some of the IC recorders 20 have the key ID as the particular key information registered in the internal memory 6a (see Fig. 2), and the other of the IC recorders 20 have no key ID registered. The other IC recorders 20 having no key ID are customizable for setting a particular function by a dealer on condition that the dealer owns a particular IC recorder 20 having the key ID thereof. The key ID information of the particular IC recorder 20 is recorded at the shipment thereof, and thereafter remains unrewritable.

As shown in Fig. 2, the IC recorder 20 includes a system controller 6, as control means, including a central processing unit (CPU) for controlling the entire IC recorder 20, a digital signal processor (DSP) 5 for performing voice signal processing for recording and playing, a built-in microphone 1, a switch 16 for selecting between the built-in microphone 1 and an external remote-controlled microphone, a microphone amplifier (AMP) 2 for amplifying a voice output signal from the microphone, a low-pass filter (LPF) 3 for input, an input analog-to-digital (A/D) converter 4, a playing digital-to-analog (D/A) converter 12, an LPF 13 for playing, a power amplifier (AMP) 14 for amplifying a played voice signal, a loudspeaker 15, an LCD display 10, an LCD driving circuit 9 driving the LCD display 10, a removable recording medium 8 composed of a flash memory card for recording input voice data, an operation switch bank 7, an external communication circuit (USB) 17 communicating with external devices, the PC 30 for example, and a USB terminal 18 (Fig. 1) to be connected with the external communication circuit 17.

The built-in microphone 1 converts a sound into an electrical signal. The microphone amplifier 2 amplifies the electrical signal from the built-in microphone 1 or the external remote-controlled microphone.

The LPF 3 and LPF 13 filter out unwanted frequency bands to prevent the generation of noise. The A/D converter 4 analog-to-digital converts an input analog voice signal into a digital signal, and the D/A converter 12 digital-to-analog converts a digital signal into an analog signal.

The digital signal processor 5, under the control of the system controller 6, encodes the digital voice signal from the input A/D converter 4 during recording, and decodes encoded voice data to output the decoded voice signal to the D/A converter 12 during playing.

The D/A converter 12 converts the input digital signal into an analog signal. The power amplifier 14 amplifies a voice signal, and the loudspeaker 15 converts the voice signal into a sound, thereby emitting the sound.

Connected to the system controller 6 are, in addition to the digital signal processor 5, the recording medium 8, the LCD driving circuit 9, the LCD display 10, control signal lines connected to the operation switch bank 7, and a switching signal line which controls the switch 16. The system controller 6 includes record control means which records the voice data onto the recording medium 8, play control means which plays the voice data from the recording medium 8, and transmission control means which transfers the voice data from the recording medium 8 to the USB connected PC 30. The system controller 6 further includes the internal memory 6a composed of a flash memory. As shown in Fig. 3, a memory area 40 of the internal memory 6a contains a program area 40a storing a variety of program information for controlling the IC recorder 20, an information recording area 40b storing the voice data to be recorded, and a key ID area 40c identifying the IC recorder 20.

The particular IC recorder 20 registers in the key ID area 40c thereof a predetermined single key ID or one key ID specified from among a plurality of key IDs, and other ordinary IC recorders 20 have no key IDs registered therein.

The voice data file stored in the recording medium 8 contains the voice data and, in the file header thereof, settings and parameters needed to be continuously stored even when power is removed from the system controller 6, including, for example, a user ID, setting of the selection of a record mode, setting of the selection of a beep sound, setting of the selection of a voice-activated recorded sound, and a play position of data. The voice data can contain other types of data, such as video data or numerical data.

Under the control of the LCD driving circuit 9 controlled by the system controller 6, the LCD display 10 displays, in characters or symbols, an operational status of the IC recorder 20 that starts a predetermined sequence in response to a switching operation of the operation switch bank 7. During a recording operation, the LCD display 10 displays a status message that the recording operation is in progress.

The operation switch bank 7 includes a group of operational switches for controlling a variety of functions. Each switch of the operation switch bank 7 is turned on and off in response to the operation of a corresponding control button arranged external to the IC recorder 20. The operation switch bank 7 includes a record switch (REC SW) 7a for starting the recording operation, a play switch (PLAY SW) 7b for playing the voice data recorded on the recording medium 8, a stop switch (STOP SW) 7c for stopping the recording operation or the playing operation, a fast-forward switch (FF SW) 7d for modifying a specified position on the voice data file on the recording medium 8 and selecting the voice data file while editing, a rewind switch (REW SW) 7e for fast rewinding, and a menu switch (MENU SW) 7f, and particular operational switches switch A (A SW) 7g and switch B (B SW) 7h.

The switch A 7g and the switch B 7h are assigned to respective functions in the customization operation. Such functions include functions selectable by the menu switch, functions selected from among other functions and customized, and initially set functions. For example, a customization operation may be performed to an index recording function, a folder switching function, a recording mode switching function, a microphone gain switching function, a variable control voice actuator (VCVA) switching function, a display switching function, a priority switching function, and a ditherable function. The customization operation to the particular functions assigned to the switch A 7g and the switch B 7h will be described later.

The voice data captured by the built-in microphone 1 is recorded as a single voice data file or a plurality of voice data files on the loaded recording medium 8 under the control of the system controller 6 in the IC recorder 20. The recorded voice data is played under the control of the system controller 6. When the IC recorder 20 is connected to the external communication circuit (USB) 30b of the PC 30 via the USB terminal 18 and the USB terminal 19 (or via a cradle) as shown in Fig. 2, the voice data file is transferred from the recording medium 8 to a predetermined memory of the PC 30 under the control of the system controller 6.

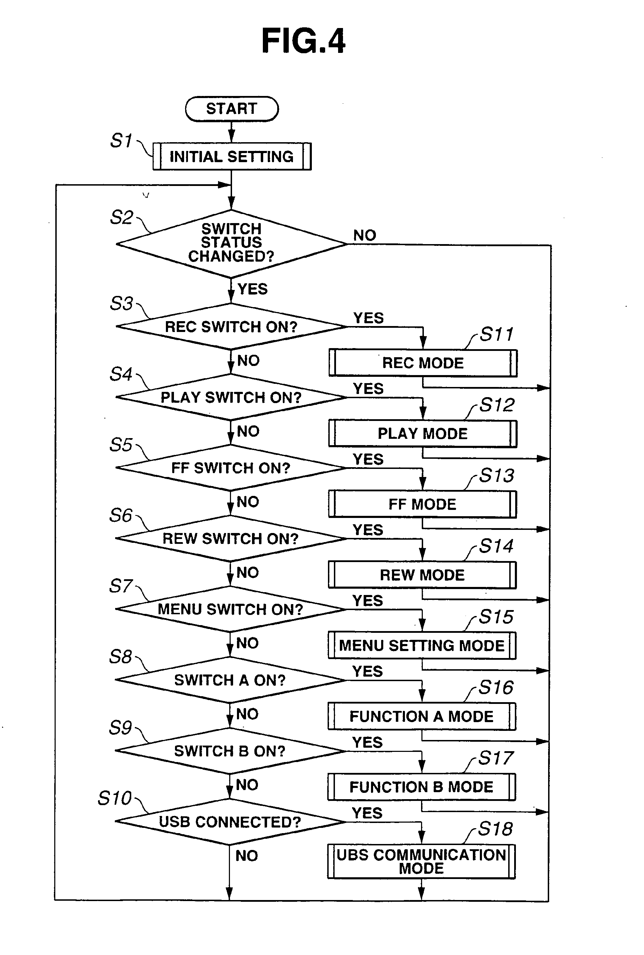

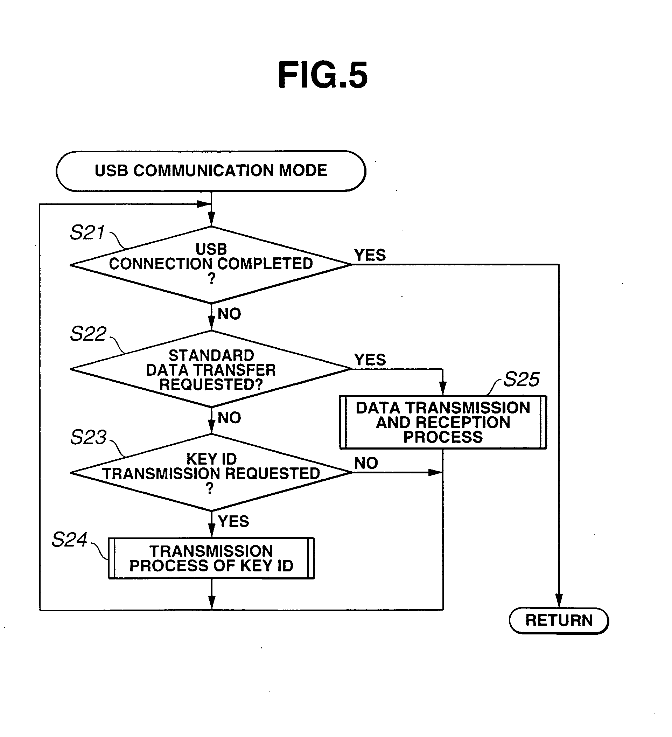

A main routine of a control process of a recording operation or the like of the IC recorder 20 and a subroutine "USB communication mode" invoked in the main routine are described with reference to Figs. 4 and 5.

Fig. 4 is a flowchart of the main routine, and Fig. 5 is a flowchart of the subroutine "USB communication mode".

The process of the main routine and the subroutine including the record mode are performed under the control of the system controller 6.

In the main routine of Fig. 4, an initial setting is performed on control factors in the IC recorder 20 in step S1. In step S2, a status change (to on) of the operation switch bank 7 is checked. If a change is detected, the main routine proceeds to step S3 through S9.

If the record switch 7a in the switch bank 7 is turned on, the main routine jumps to step S11 to invoke the subroutine record mode to perform the recording operation. If the play switch 7b is turned on, the main routine jumps to step S12 to invoke a subroutine play mode to perform the play operation. If the fast-forward switch 7d is turned on, the main routine jumps to step S13 to invoke the fast-forward mode to perform a fast-forward operation. If the rewind switch 7e is turned on, the main routine jumps to step S14 to invoke a rewind mode to perform a fast-rewind operation. If the menu switch 7f is turned on, the main routine jumps to step S15 to invoke a menu setting mode to perform a menu setting operation.

If the switch A 7g is turned on, a subroutine "function A mode" is invoked to perform a particular customized function. If the switch B 7h is turned on, a subroutine "function B mode" is invoked to perform another particular customized function.

If a USB connection is detected in step S10, the main routine proceeds to step S18 to invoke a subroutine "USB communication mode", shown in Fig. 5, to perform a USB communication process. The process in the USB communication mode is controlled by both the system controller 6 and the controller 30a of the PC 30 in cooperation.

In the process of the subroutine "USB communication mode", the end of a USB communication is checked in step S21. If it is determined that the USB communication is not yet completed, the subroutine proceeds to step S22. The system controller 6 determines whether the PC 30 has requested the system controller 6 to transfer standard data. If the data transfer is requested, the subroutine jumps to step S25 to invoke a subroutine "data transmission and reception process" to perform the process. If it is determined that no data transfer is requested, the subroutine proceeds to step S23. The system controller 6 determines whether the PC 30 has requested the system controller 6 to transfer the key ID. If it is determined that the key ID has been requested, the subroutine proceeds to step S24 to transfer data in the key ID area 40c in the IC recorder 20 to the PC 30.

The main routine returns to step S3 after each mode is completed.

The customization operation performed by the PC 30 on the function of the IC recorder 20 is described below.

A customization software program is installed in the PC 30. The customization operation is performed by the installed customization software program. The installation and the initiation of the customization software program are permitted only when the particular IC recorder 20 having the key ID is USB connected to the PC 30. More specifically, the particular IC recorder 20 having the key ID is USB connected to the PC 30, and the PC 30 receives the key ID data from the key ID area 40c of the internal memory 6a in the IC recorder 20. If the key ID is recognized, the installation of the customization software program is permitted. The customization software program is then initialized. If the predetermined key ID is not recognized in the IC recorder 20 when the installation is attempted, more specifically, even if an IC recorder 20 having no key ID, other than the particular IC recorder 20, is USB connected, the installation and the initialization of the customization software program are not permitted.

If an ordinary IC recorder 20 other than a particular IC recorder 20 is USB connected to the PC 30 subsequent to the initiation of the customization software program, the customization function is set in the PC 30 under the control of the customization software program. In the customization process, the function A and the function B as the customization functions are selected based on customization information of the IC recorder 20. The customization information is transmitted to the IC recorder 20 to assign the selected customization functions to the switch A 7g and the switch B 7h. Upon registration, the customization process of the IC recorder 20 is thus completed.

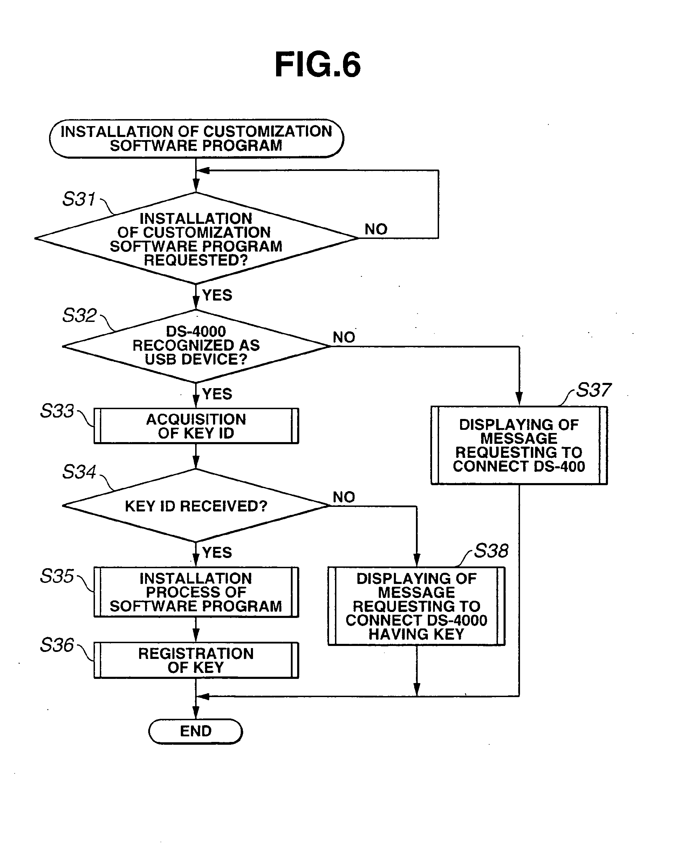

The installation process of the customization software program and a customization initiation process by the customization software program are described with reference to Figs. 6, 7, and 8.

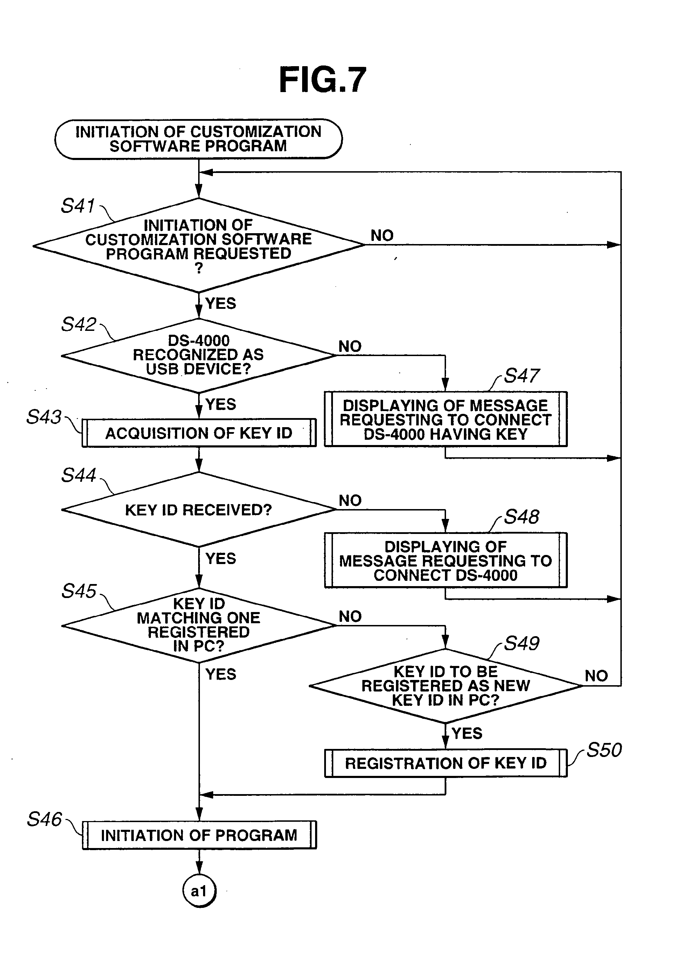

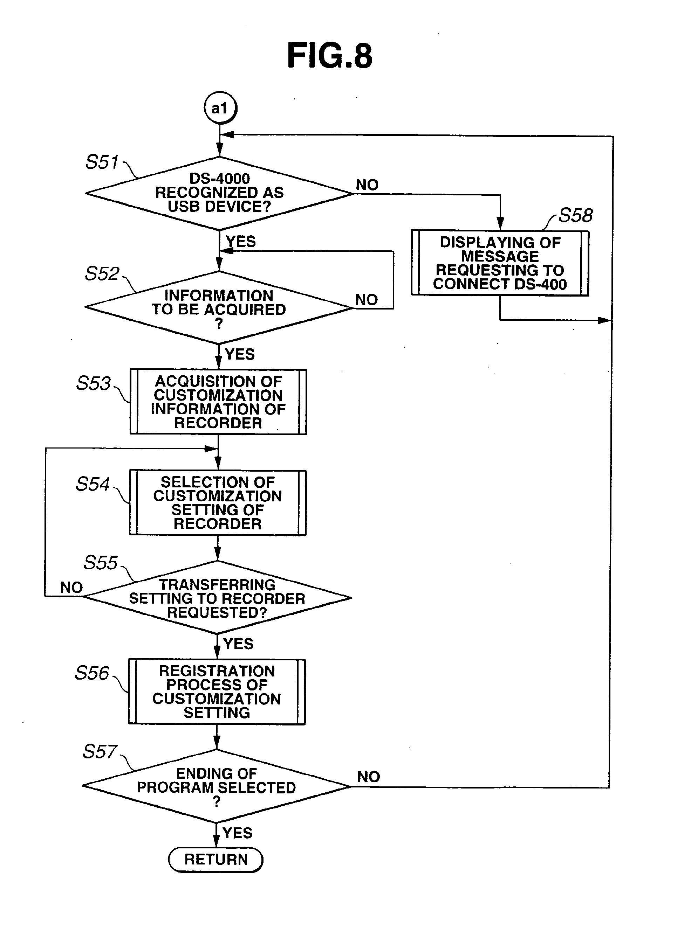

Fig. 6 is a flowchart of the installation process of the customization software program. Figs. 7 and 8 are flowcharts of the customization process of the customization software program.

The installation process and the initiation process of the customization software program are controlled by both the controller 30a of the PC 30 and the system controller 6 in the IC recorder 20 in cooperation.

In the installation process of Fig. 6, the process proceeds to step S32 after the request to install the customization software program is recognized in step S31. It is determined in step S32 whether the PC 30 recognizes the model name of the IC recorder 20, i.e., DS-4000 as a USB device. If it is determined that DS-4000 is recognized, the process proceeds to step S33. If it is determined that DS-4000 is not recognized, a message requesting to connect DS-4000 as the IC recorder 20 is displayed on a monitor in step S37, and this routine ends.

In step S33, an acquisition process of acquiring the key ID of the IC recorder 20 is performed. More specifically, the data stored in the key ID area 40c in the internal memory 6a in the IC recorder 20 is captured by the communication control means and the communication means. In this process, the subroutine "USB communication mode" of Fig. 5 is invoked in the IC recorder 20, and the ID information recorded in the key ID area 40c is transmitted to the PC 30. The key information detecting means checks whether the data in the received key ID area 40c is a predetermined key ID in step S34. If the connected IC recorder 20 is a particular IC recorder 20 and the received data is a predetermined key ID, the process proceeds to step S35. If the data is not the predetermined key ID, the process jumps to step S38. A message requesting to connect DS-4000 as the IC recorder 20 having the predetermined key ID is displayed on the monitor (by the control means for inhibiting the predetermined operation) and this routine ends.

When the process proceeds to step S35 after the detection of the predetermined key ID, the customization software program is installed (by the control means that permits the predetermined operation to be performed). The process proceeds to step S36 to register the key ID on the PC 30 and this routine ends.

The initiation process of the customization software program is performed in succession to the installation of the customization software program as shown in Figs. 7 and 8. In step S41, the request to initiate the customization software program is recognized. The process proceeds to step S42. It is determined in step S42 whether DS-4000 as the IC recorder 20 connected to the PC 30 is recognized as a USB device. If it is determined that DS-4000 is recognized, the process proceeds to step S43. If it is determined that DS-4000 is not recognized as a USB device, a message requesting to connect DS-4000 as the IC recorder 20 is displayed on the monitor in step S47, and the process returns to step S41.

In step S43, the acquisition process of acquiring the key ID of the connected IC recorder 20 is performed by the communication control means and the communication means. In step S44, the key information detecting means checks whether the data received from the key ID area 40c is a predetermined key ID. If the IC recorder 20 is a particular IC recorder and if the received data matches a predetermined key ID, the process proceeds to step S45. If it is determined that the received data fails to match the predetermined key ID, the process jumps to step S48. A message requesting to connect DS-4000 as the IC recorder 20 having the predetermined key ID is displayed on the monitor and the process proceeds to step S41 (corresponding to the operation of the control means inhibiting the predetermined operation).

It is determined in step S45 whether the received key ID matches the key ID registered in the PC 30. If it is determined that the two key IDs match each other, the process proceeds to step S46. The installed customization software program is initiated. If it is determined that the two key IDs fail to match each other, the process jumps to step S49 to determine whether to register the received key ID on the PC 30 as a new key ID. If it is determined in step S49 that the received key ID is to be registered on the PC 30, the received key ID is registered as the new key ID in step S50. The process proceeds to step S46. Optionally, a single key ID only is approved in the key ID registration process, and the other key ID is set to be unable to initiate the customization software program.

An IC recorder 20, other than the predetermined IC recorder 20, having no key ID and to be customized is USB connected to the PC 30. It is determined in step S51 whether DS-4000 as the IC recorder 20 is recognized as a USB device. If it is determined that DS-4000 is recognized as a USB device, the process proceeds to step S52. If it is determined that DS-4000 is not recognized as a USB device, a message requesting to connect DS-4000 as the IC recorder 20 is displayed on the monitor in step S58, and the process returns to step S51.

Whether to acquire function customization information is determined in step S52. If it is determined that the function customization information is to be acquired, the process proceeds to step S53 to acquire the function customization information about the IC recorder 20. In step S54, the function A and the function B are selected and set from among the customization function based on the function customization information of the IC recorder 20. In the selection and setting, the user can select one from a variety of settable functions displayed on the monitor of the PC 30 or the monitor of the IC recorder 20.

A request to transfer the set function customization information to the connected IC recorder 20 is issued in step S55 in order to assign the customization functions selected in step S54 to the switch A 7g and the switch B 7h. In step S56, the customized function is registered on the IC recorder 20. The selection of the ending of the routine is checked in step S57. If it is determined that the ending of the routine is selected, the routine ends. If it is determined that the ending of the routine is not selected, the process returns to step S51.

As for the recorder 20 as the mobile information terminal connected to the PC 30 as the terminal control apparatus, the function of the IC recorder 20 is customized only under the particular conditions, more specifically, by a dealer or the like who has an IC recorder having a predetermined key ID. The customization software program for performing the customization process can be installed and initiated only by the key ID read from the particular IC recorder 20. Under the control of the customization software program, another IC recorder 20 having no key ID can be customized. The function of an IC recorder 20 having no key ID is customized using an IC recorder 20, of the same type but having a key ID, instead of an electronic key.

In the above discussion, the predetermined operation performed on the terminal is the customization of the function. The predetermined operation may include control process of the mobile information terminal for data playing, and setting of ID data and customization information.

The terminal control apparatus and the terminal control software program in accordance with the embodiments of the present invention perform the predetermined operation to the mobile information terminal under the particular conditions.

The present invention is not limited to the above-referenced embodiments. Various changes and modifications of the embodiments are possible without departing from the scope of the present invention. The above-referenced embodiments include a variety of elements, and any combination of the elements falls within the scope of the present invention.

Having described the preferred embodiments of the invention referring to the accompanying drawings, it should be understood that the present invention is not limited to those precise embodiments and various changes and modifications thereof could be made by one skilled in the art without departing from the spirit or scope of the invention as defined in the appended claims.

## Claims

1. A terminal control apparatus performing a predetermined operation on a mobile information terminal connected thereto, the terminal control apparatus comprising:
communication means connected to the mobile communication terminal for communication;
terminal operating means for performing the predetermined operation to the mobile information terminal via the communication means;
key information detecting means for detecting whether predetermined key information is present in the connected mobile information terminal; and
control means for permitting the terminal operating means to perform the predetermined operation on the mobile information terminal if the key information detecting means detects the predetermined key information or inhibiting the terminal operating means from performing the predetermined operation on the mobile information terminal if the key information detecting means detects no predetermined key information.

2. The terminal control apparatus according to claim 1, wherein the key information detecting means tries to detect the predetermined key information when the terminal control apparatus starts operating or when the mobile information terminal is connected to the terminal control apparatus, and wherein if the key information detecting means has detected the predetermined key information, the control means permits the terminal operating means to perform the predetermined operation until the terminal control apparatus stops operating.

3. The terminal control apparatus according to claim 2, wherein if the key information detecting means has detected the predetermined key information in the mobile information terminal followed by a disconnection of the mobile information terminal having the predetermined key information and then a connection of another mobile information terminal, the control means permits the terminal operating means to perform the predetermined operation on the other mobile information terminal.

4. A recording medium storing a terminal control software program for causing a computer to perform a predetermined operation on a mobile information terminal connected to the computer, the terminal control software program comprising steps of:
establishing a connection to the mobile information terminal for communication;
detecting whether the mobile information terminal has predetermined key information;
performing the predetermined operation to the mobile information terminal if the predetermined key information is detected;
and
inhibiting the computer from performing the predetermined operation on the mobile information terminal if the predetermined key information is undetected.

5. The terminal control software program according to claim 4, further comprising steps of:
detecting the predetermined key information when the software program is initiated or when the mobile information terminal is connected to the computer; and
if the predetermined key information is detected in the mobile information terminal, permitting the computer to perform the predetermined operation until the end of the software program.

6. The terminal control software program according to claim 4, further comprising steps of:
reading the predetermined key information from the connected mobile information terminal at the installation of the software program to the computer;
storing the predetermined key information in the computer together with the installation of the software program in the computer if the predetermined key information is successfully read; and
stopping installing the software program if the predetermined key information is not successfully read.

7. The terminal control software program according to claim 6, further comprising steps of:
comparing the predetermined key information stored in the computer with the predetermined key information in the connected mobile information terminal;
performing the predetermined operation on the mobile information terminal if the two pieces of predetermined key information match each other; and
inhibiting the predetermined operation on the mobile information terminal if the two pieces of predetermined key information fail to match each other.

8. The terminal control software program according to claim 6, further comprising steps of:
comparing the predetermined key information stored in the computer with the predetermined key information in the connected mobile information terminal when the software program is initiated or when the mobile information terminal is connected to the computer; and
performing the predetermined operation on the mobile information terminal until the software program ends if the two pieces of predetermined key information match each other.
